# EUROPÄISCHE PATENTSCHRIFT

(11) **EP 1 753 644 B1**
(45) Veröffentlichungstag und Bekanntmachung des Hinweises auf die Patenterteilung: **11.02.2009**
(21) Anmeldenummer: 05701648.7
(22) Anmeldetag: 07.02.2005
(51) Int. Cl.: B60S 1/08, F03G 7/00

(54) **VERSTELLVORRICHTUNG IN EINE KRAFTFAHRZEUG, SOWIE VERSTELLVERFAHREN**
DEVICE FOR ADJUSTMENT IN A VEHICLE AND RELATED METHOD
DISPOSITIF D'AJUSTEMENT DANS UN VEHICULE ET METHODE CORRESPONDANTE

(30) Priorität: 10.02.2004 DE 102004006342
(43) Veröffentlichungstag der Anmeldung: 21.02.2007
(73) Patentinhaber: ROBERT BOSCH GMBH, 70442 Stuttgart (DE)
(72) Erfinder: CETTIER, Daniel, 76137 Karlsruhe (DE); SCHAEFERT, Arthur, 77830 Buehlertal (DE)
(86) Internationale Anmeldenummer: PCT/EP2005/050509
(87) Internationale Veröffentlichungsnummer: WO 2005/077722

(56) Entgegenhaltungen:
- EP-A- 1 279 784
- WO-A-03/107523
- DE-A1- 10 244 432
- DE-C1- 10 116 837
- US-A1- 2003 168 936

## Beschreibung

### Stand der Technik

Die Erfindung betrifft eine Verstellvorrichtung sowie eine Verfahren zum Verstellen eines beweglichen Teils in einem Kraftfahrzeug nach der Gattung der unabhängigen Ansprüche.

Es sind schon zahlreiche Verstellvorrichtungen für Kraftfahrzeuge bekannt, beispielsweise aus der DE-C-37 09 476, die als bewegliches Teil einen Wischhebel aufweisen, der ein Wischblatt umfasst und zur Beseitigung von Feuchtigkeit und/oder Schmutz auf der Scheibe des Kraftfahrzeugs bewegbar ist. Hierbei ist ein Antriebsmittel zum Bewegen des Wischhebels vorgesehen, welches als Torsionsstange aus einer Memory-Metalliegierung ausgebildet ist. Dieses Material verformt sich unter Einwirkung einer Temperäturänderung aus einer ersten Betriebsstellung in eine zweite Betriebsstellung und versetzt somit den Wischhebel in Bewegung.

Weiterhin ist aus der DE-A-37 09 475 eine Verstellvorrichtung bekannt, bei der die Kraft, mit der das Wischblatt auf die Scheibe gedrückt wird, durch ein Memorymetall, welches im Wischhebel integriert ist, eingestellt wird.

Die hier verwendeten thermischen Effekte sind jedoch von ihrer Steuerbarkeit, insbesondere in der Abkühlphase, und Langlebigkeit teilweise problematisch.

Mit der WO 03/107523 A1 sind verschiedene Vorrichtungen zur Kontrolle von Gas- bzw. Flüssigkeitsströmen bekannt geworden. Bei solchen Vorrichtungen wie beispielsweise Ventilen oder Kühlkreisläufen werden Flussleitelemente in ihrer Geometrie verändert. Hierzu werden die Flussleitelemente beispielsweise aus elektroaktivem Polymermaterial gefertigt, das beim Anlegen einer Spannung seine Form verändert. Die elektroaktiven Polymerelemente sind hier beispielsweise als ebene Platten oder rohrförmig ausgebildet.

Die EP 1279784 A1 zeigt ein Türschloss eines Kraftfahrzeugs, bei dem ein Riegel mittels eines "shape memory elements" aus einer Metalllegierung betätigt wird. Dabei wird an das "shape memory element" ein elektrischer Strom angelegt, der das Material erhitzt, um dessen Phasenzustand zu ändern, und damit den Hebel zu lösen.

### Vorteile der Erfindung

Die erfindungsgemäße Verstellvorrichtung und das erfindungsgemäße Verfahren mit den Merkmalen der unabhängigen Ansprüche haben den Vorteil, dass durch die Ausbildung des Antriebsmittels als elektroaktives Polymer (EAP) eine exakt steuerbare, langlebige und kostengünstige Möglichkeit zum Verstellen eines beweglichen Teils gegeben ist Dabei entfällt die Fertigung und Montage eines Elektromotors für herkömmliche Verstellanwendungen, wodurch Bauraum und Gewicht gespart wird. Die EAP-Aktuatoren zeichnen sich außerdem durch eine hohe Flexibilität, geringen Leistungsbedarf, geringe Kosten und einer guten Eignung für die Serienproduktion aus. Außerdem besteht auch die Möglichkeit, weitere elektronische Bauteile oder Sensoren direkt in die EAP-Materialien zu integrieren.

Durch die in den Unteransprüchen aufgeführten Maßnahmen ergeben sich vorteilhafte Weiterbildungen und Verbesserungen der in den unabhängigen Ansprüchen angegebenen Merkmale. Vorteilhaft ist hierbei besonders, wenn das als EAP ausgebildete Antriebsmittel das bewegliche Teil direkt, je nach Bedarf in eine Dreh- oder Linearbewegung versetzt, da auf diese Weise kein Getriebe zur Erzeugung der gewünschten Verstellung benötigt wird.

Dabei kann besonders günstig ein entsprechender EAP- Typ ausgewählt werden, der die elektrische Energie direkt in eine longitudinale Längenänderung oder in eine Verbiegung umsetzt, wodurch verschiedene Bewegungsabläufe des Stellteils erzeugt werden können.

Besonders große Verstellwege können dadurch erzielt werden, dass mehrere elektroaktive Polymere in einer Art mechanischer Reihenschaltung zusammenwirken, wobei die einzelnen EAPs beispielsweise in Schichten angeordnet werden. Diese sind sehr kompakt und fertigungstechnisch einfach herstellbar. Durch solch eine "sandwich-Anordnung" kann auch die aufzubringende elektrische Spannung für einen bestimmten Verstellweg reduziert werden. Werden EAPs mit biegeförmiger Formänderung miteinander verdrillt oder verzwirnt, kann die Verbiegung der einzelnen faserförmigen EAPs in eine Längenänderung der verzwirnten EAP-Anordnung umgesetzt werden.

Weiterhin ist es als vorteilhaft anzusehen, wenn ein Ruhezustand vorgesehen ist, in dem das Antriebssmittel eine Verstellung des Verstellglieds blockiert. Hierdurch wird verhindert, dass das Verstellglied durch den Fahrtwind oder eine andere Fremdeinwirkung unbeabsichtigt bewegt wird. Beispielsweise lässt sich damit eine Tankklappe verschließen und beim Tanken automatisch entriegeln. Mittels einem eingebauten Federelement öffnet sich dann die Klappe selbständig.

Wird das EAP für den Antrieb einer Drehbewegung verwendet, kann vorteilhaft auf eine zusätliche Lagerung des zu verstellenden Teils verzichtet werden, da das EAP ein Drehlager bildet.

Da zwischen der Formänderung des EAP und der an dieses angelegten elektrischen Spannung ein definierter Zusammenhang besteht, lässt sich der Verstellvorgang über die an den Elektroden anliegende Spannung ohne Verwendung eines aufwändigen Getriebes einfach steuern.

Zur Erzeugung einer Volumenänderung kann vorteilhaft ein ionisches EAP verwendet werden, bei dem mittels Ionenwanderung schon bei relativ kleinen elektrischen Feldern ein relativ großer Verstellweg erreicht werden kann.

Eine Längenänderung oder Verbiegung des EAP wird sehr zuverlässig mittels elektronischen EAPs erzielt, bei denen sich elektrische Dipole in einem angelegten elektrischen Feld ausrichten und die entsprechende Formänderung bewirken.

Das erfindungsgemäße Verfahren, bei dem ein verstellbares Element mittels des elektroaktives Polymer (EAP) angetrieben wird, hat den Vorteil, dass die elektrische Energie direkt mit einem hohem Wirkungsgrad und praktisch geräuschlos in eine Bewegung des Stellglieds umgesetzt werden kann.

### Zeichnungen

Verschiedene Ausführungsbeispiele sind in den Zeichnungen dargestellt und in der nachfolgenden Beschreibung näher erläutert. Es zeigen:
- Figur 1: eine nicht beanspruchte Verstellvorrichtung in schematischer Darstellung,
- Figuren 2 bis 4: Verriegelungen von erfindungsgemäßer Verstellvorrichtungen,
- Figuren 5 und 6: nicht beanspruchte Verstellvorrichtungen mit verbiegbarem EAP und
- Figuren 7 und 8: zwei Variationen eines EAP-Antriebs für eine Lüftungsklappe.

### Beschreibung der Ausführungsbeispiele

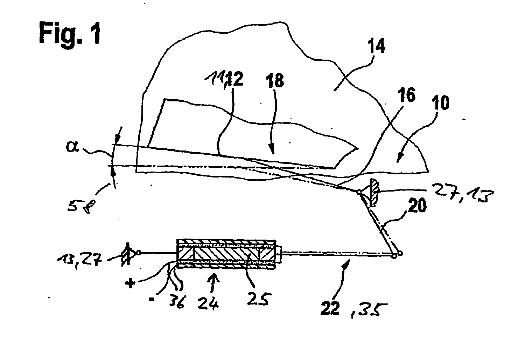

In Figur 1 ist eine Verstellvorrichtung 10 in einer schematischen Darstellung gezeigt. Diese weist als bewegliches Teil 11 ein Wischblatt 12 auf, das im Betrieb pendelnd über eine Scheibe 14, insbesondere die Windschutzscheibe eines Kraftfahrzeugs, bewegt wird. Weiterhin umfasst die Verstellvorrichtung 10 einen Wischerarm 16, der zusammen mit dem Wischblatt 12 einen Wischhebel 18 bildet. Der Wischerarm 16 ist an seinem dem Wischblatt 12 abgewandten Ende drehbar gelagert und durch eine Kurbel 20 antreibbar. Die Kurbel 20 wiederum ist drehbeweglich mit einer Schubstange 22 verbunden, die durch eine Hin- und Herbewegung den Wischhebel 16 in eine pendelnde Verstellbewegung versetzt. Zur Erzeugung der Hin- und Herbewegung ist die Schubstange 22 an ihrem der Kurbel 22 abgewandten Ende mit einem Antriebsmittel 24 verbunden, welches ein elektroaktives Polymer (EAP) 25 umfasst.

Das elektroaktive Polymer 25 dehnt sich beim Anlegen einer Spannung in einer vorbestimmten Richtung aus oder zieht sich in einer vorbestimmten Richtung zusammen und wirkt damit als Linear-Aktuator 24. Durch eine entsprechende elektrische Steuerspannung am Antriebsmittel 24, bzw. am Polymer 25 des Antriebsmittels 24, wird die Schubstange 22 in eine Hin- und Herbewegung versetzt. Hierbei ist das der Schubstange 22 abgewandte Ende 54 des Antriebsmittels 24 fest mit der Karosserie 27 des Kraftfahrzeugs verbunden, so dass die gesamte Längenausdehnung des elektroaktiven Polymers 25 auf die Schubstange 22 übertragen wird.

In einer Variation kann das elektroaktive Polymer 25 auch derart gelagert sein, dass seine Längenausdehnung in beiden Richtungen seiner Längserstreckung ausgenutzt wird. Dabei ist auf beiden Seiten der Längserstreckung des Antriebsmittels 24 eine Schubstange angeordnet, die beispielsweise eine weitere Kurbel mit einem weiteren Wischhebel , die hier der Übersichtlichkeit halber nicht gezeichnet sind, antreiben.

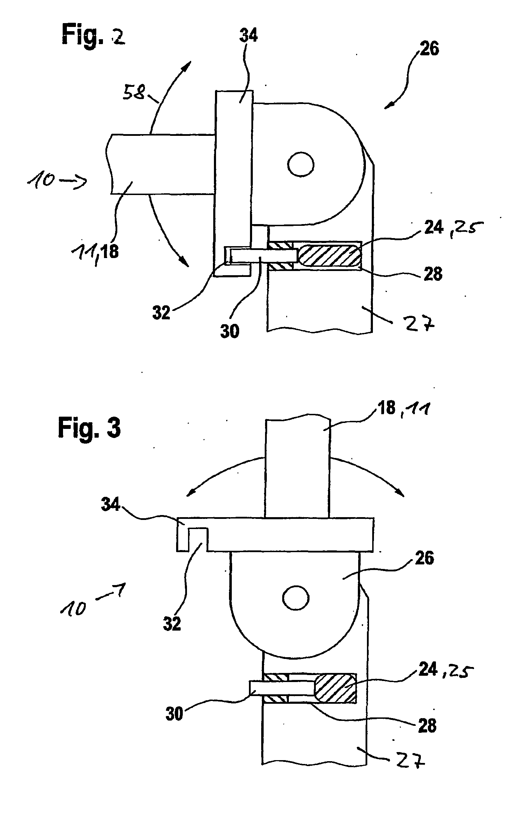

In den Figuren 2 und 3 ist ein Verriegelungsmechanismus für ein kardanisches Gelenk einer erfindungsgemäßen Verstellvorrichtung 10 gezeigt Das elektroaktive Polymer 25 als Antriebsmittel 24 ist in einer Tasche 28 des feststehenden Teils 13 des kardanischen Gelenks 26 angeordnet. Wird nun Spannung an das Antriebsmittel 24 angelegt, so dehnt es sich aus und schiebt ein Verriegelungselement 30 als bewegliches Teil 11 in eine Aussparung 32, die im beweglichen Verstellglied 40 des kardanischen Gelenks 26 angeordnet ist. Hierzu weist das kardanische Gelenk 36 eine Platte 34 auf, die sich in Richtung des Verriegelungsbolzens 30 erstreckt und die Aussparung 32, die mit dem Verriegelungsbolzen 30 korrespondiert, aufweist.

Figur 3 zeigt die Verriegelung aus Figur 2 in entriegelter Position. Das elektroaktive Polymer 25 ist in der Tasche 28 des festen Teils 13 des kardanischen Gelenks 26 angeordnet Der Verriegelungsbolzen 30 ist nach innen, in die Tasche 28 hinein gezogen, so dass dieser nicht mit der Aussparung 32 in Eingriff steht. Dadurch ist das bewegliche Verstellglied 40 des kardanischen Gelenks 26 frei und entsprechend seinen Freiheitsgraden beweglich. Der Verriegelungsbolzen 30 kann fest mit dem elektroaktiven Polymer 25 verbunden sein, oder aber auf dieses aufgesetzt sein und durch ein Federelement in einer Ruheposition gehalten werden. Optimalerweise ist der Verriegelungsbolzen 30 in der Verriegelungsposition, hier also in ausgefahrenem Zustand, wenn am elektroaktiven Polymer 25 keine elektrische Spannung anliegt. Dadurch ist der Wischhebel 18 im Falle einer ausgeschalteten Verstellvorrichtung 10 verriegelt und kann nicht durch Wind oder Vibrationskräfte in das Sichtfeld des Fahrers gelangen.

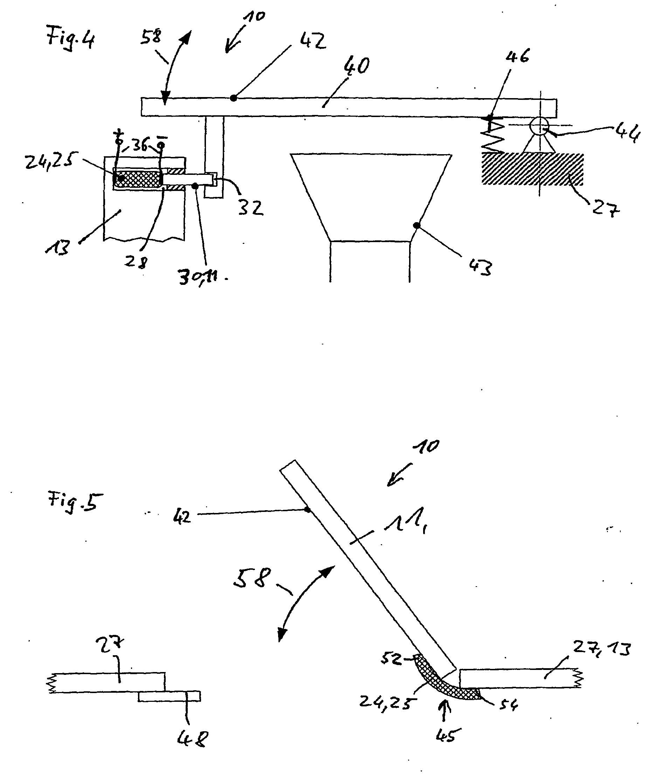

In Figur 4 ist eine weitere Verstellvorrichtung 10 dargestellt, bei der als Verstellglied 40 eine Tankklappe 42 eines Kraftfahrzeugs mittels eines Verriegelungselements 30 als bewegliches Teil 11 in geschlossener Position gehalten wird. Dabei weist - wie in Figur 2 und 3 - das Verstellglied 40 ebenfalls die Aussparung 32 auf, in die das Verriegelungselement 30 zur Verrastung des Verstellglieds 40 eingeführt ist. Das Verriegelungselement 30 stellt hierbei das bewegliche Teil 11 dar, das direkt durch das Antriebsmittel 24 linear verstellt wird. Das Antriebsmittel 24 wird durch das elektroaktive Polymer 25 gebildet, an dem über die Elektroden 36 die entsprechende Steuerspannung anlegbar ist. Das EAP 25 ist wiederum in der Aussparung 28 der Karosserie 27 angeordnet, das als festes Halteteil 13 bzgl. des EAP 25 dient. Das EAP 25 ist bspw. im spannungslosen Zustand maximal ausgedehnt, sodass die Tankklappe 42 verriegelt ist. Wird eine Spannung angelegt, zieht sich das EAP 25 zusammen, wodurch das Verriegelungselement 30 das Verstellglied 40 freigibt. An einem Gelenk 44 des Verstellglieds 40 ist ein Federelement 46 angeordnet, das das Verstellglied 40 selbsttätig öffnet. Somit ist der Zugang zu einem Tankstutzen 43 frei. Nach dem Beenden des Tankens kann das Verstellglied 40 von Hand entgegen der Federkraft des Federelements 46 wieder geschlossen werden, und mittels der Sperrelements 30 wieder verriegelt werden. In einer weiteren Variation kann das Verriegelungselement 30 ebenfalls in einer Richtung mittels eines elastischen Elements bspw. in die Verriegelungsposition verstellt werden, sodass an das EAP 25 nur zum Öffnen der Tankklappe 42 eine Spannung angelegt wird.

Figur 5 zeigt eine alternative Ausführung zum Öffnen der Tankklappe 42. Hierbei ist die Tankklappe 42 als bewegliches Teil 11 direkt mit dem EAP 25 verbunden, das als Antriebsmittel 24 zum Öffnen und zum Schließen der Tankklappe 42 dient. Hierzu ist das EPA 25 ebenfalls mit einem festen Halteteil 13 verbunden, das durch die Karosserie 27 gebildet wird. Das EAP 25 ist hierbei derart ausgebildet, dass dieses beim Anlegen eines elektrischen Feldes mittels der Elektroden 36 eine Biegeverformung ausführt. Dabei bildet das EAP 25, das das bewegliche Teil 11 mit dem Halteteil 13 verbindet, gleichzeitig eine drehbare Lagerung für das bewegliche Teil 11, und übernimmt damit die Funktion eines Scharniers. Somit kann die Klappe 42 bspw. durch das Anlegen eines elektrischen Feldes geöffnet werden, wobei sich die inneren elektrischen Dipole des EAPs 25 derart ausrichten, dass sich das EAP 25 verbiegt, und damit die mit diesem verbundene Klappe 42 dreht. Wird die angelegte elektrische Spannung umgepolt oder abgeschaltet, biegt sich das EAP 25 wieder in seine ursprüngliche Position zurück, wodurch sich die Klappe 42 schließt und bspw. an einem festen Anschlag 48 der Karosserie 27 anliegt

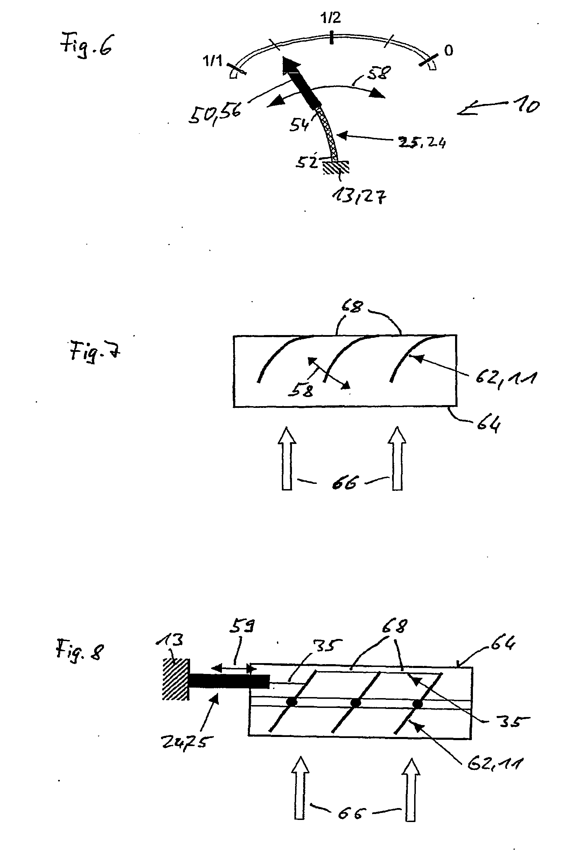

In Figur 6 ist als Antriebsmittel 24 für ein Anzeigeelement 50 ebenfalls ein EAP 25 verwendet, das aufgrund dem Zuführen einer elektrischen Energie eine biegeförmige Verformung ausführt. Dabei ist das EAP 25 mit einem Ende 52 am festen Halteteil 13 befestigt. An einem anderen Ende 54 ist ein Zeiger 56 als Verlängerung des EAPs 25 angeordnet. Der Zeiger 56 stellt hierbei das bewegliche Teil 11 dar, das beim Anlegen einer Spannung an das EAP 25 aufgrund dessen Verbiegung eine Art Drehbewegung 58 ausführt. Unter dem als Anzeigeelement 50 dienenden Zeiger 56 ist bspw. eine Skala 57 hinterlegt, auf der ein entsprechender Wert abgelesen werden kann, auf den der Zeiger 56 zeigt Ein solches Anzeigeelement 50 kann bspw. für die Anzeige der Füllhöhe eines Tanks, oder eine Temperaturanzeige verwendet werden. Prinzipiell kann jede zu messende Größe in ein elektrisches Signal umgewandelt werden, das wiederum als Spannung an das EAP 25 angelegt werden kann. Alternativ kann auch ein EAP 25 verwendet werden, das sich linear ausdehnt, wobei ebenfalls eine zusätzliche Mechanik 35 verwendet werden kann, um den Zeigerausschlag zu vergrößern.

Bei der Verstellvorrichtung 10 gemäß Figur 7 sind die beweglichen Teile 11 als Lamellen 62 einer Lüftungsklappe 60 ausgebildet. Die Lüftungsklappe 60 weist ein Gehäuse 64 auf, das als festes Teil 13 an der Karosserie 27 befestigt ist. Die als Lamellen 62 ausgebildeten beweglichen Teile 11 weisen integrierte elektroaktive Polymere 25 auf, und sind am Ende 52 mit dem festen Gehäuseteil 64 verbunden. Entsprechend Figur 6 führen die elektroaktiven Polymere 25 beim Anlegen einer Spannung eine biegeförmige Formänderung aus, wodurch die beweglichen Teile 11 praktisch eine Art Drehbewegung 58 um das Ende 52 ausführen. Mit der in Figur 7 dargestellten Position sind die Lamellen 62 praktisch vollständig geöffnet und lassen beispielsweise einen Gasstrom 66 oder einen Flüssigkeitsstrom 66 durch die Klappe 60 hindurch treten. Wird die an den EAPs 25 anliegende Spannung verändert, biegen sich diese so, dass zwischen den Lamellen 62 angeordnete Öffnungen 68 verschlossen werden. Auf Grund der in die Lamellen 62 integrierten EAPs 25 sind die Lamellen 62 in sich beweglich, so dass keinerlei zusätzliche Mechanik für das Öffnen oder Schließen der Fluidklappe 60 notwendig ist. Beispielsweise bestehen die Lamellen 62 selbst aus EAP-Material 25 oder die Lamellen 62 sind elastisch und haben integrierte, beispielsweise eingespritzte EAP-Elemente 25. Damit ist der elektrische Antrieb 24 komplett in das zu verstellende Bauteil 11 integriert. Dabei kann jede Lamelle 62 mit einer individuellen Spannung angesteuert werden, oder alle Lamellen 62 gleichzeitig mit der gleichen Spannung versorgt werden. Bei dieser Ausführung können sich die EAPs 25 über die gesamte Länge der Lamellen 62 erstrecken, oder nur am Befestigungsbereich 52 als EAP-angetriebenes drehbares Lager 45 gemäß Figur 5 ausgebildet sein. Entsprechend der gewünschten Standardposition der Lamellen 62 (offen oder geschlossen) kann das EAP seiner entsprechend seiner dielektrischen Eigenschaften ausgewählt werden, so dass jede gewünschte Position ohne Anlegen einer elektrischen Spannung als Ausgangsposition realisiert werden kann.

Eine weitere Variation einer Fluidklappe 60 ist in Figur 8 dargestellt, weil diese Verstellvorrichtung 10 ein ähnliches Wirkprinzip aufweist, wie die Vorrichtung gemäß Figur 1. Die Lamellen 62 sind als bewegliche Teile 11 drehbar im Gehäuse 64 gelagert und sind im Gegensatz zu Figur 7 hier als in sich starre, bewegliche Teile 11 ausgebildet. Die beweglichen Teile 11 sind über eine Mechanik 35 gelenkig, den als Antriebsmittel 24 dienenden elektroaktiven Polymer 25 verbunden. Das EAP 25 ist wiederum an dem einen Ende 52 mit dem festen Haltteil 13, beispielsweise der Karosserie 27 verbunden und mit dem gegen gesetzten Ende 54 mit der Mechanik 35 wirkverbunden. Beim Zuführen elektrischer Energie ändert das EAP 25 seine Länge gemäß der Linearbewegung 59, wobei hier ein ionischer EAP 25 verwendet ist, der auf Grund der Ionenwanderung in einem angelegten elektrischen Feld eine Volumenänderung ausführt (wie bspw. auch in Figur 2 und 3). Wird beispielsweise im dargestellten Zustand das Volumen des EAP 25 veningert, führt dieser entsprechend der Linearbewegung 59 eine Kontraktion aus, wodurch die Lamellen 62 die Öffnungen 68 noch weiter öffnen, um das Fluid durch die Klappe 60 strömen zu lassen. Vergrößert das EAP 25 jedoch sein Volumen, verlängert sich dieses entsprechend der Linearbewegung 59, wodurch die Lamellen 62 die Fluidklappe 60 schließen.

Durch die vielfältigen Ausbildungsmöglichkeiten der EAP-betriebenen Antriebsmittel 24 können diese ideal der jeweiligen Verstellsituation angepasst werden. So können beispielsweise in Figur 2 bis Figur 4 ebenfalls bevorzugt EAPs 25 eingesetzt werden, die ihr Volumen, insbesondere durch Ionenwanderung verändern. Bei anderen Anwendungen beispielsweise in Figur 5 bis 7 sind hingegen EAP -Material 25 zu bevorzugen, die die angelegte elektrische Spannung direkt in eine Verbiegung der EAPs 25, und damit eine Art Drehbewegung 58 des beweglichen Teils 11 umsetzen. Diese EAPs 25 sind in der Regel elektronische EAPs 25, wobei die Ausrichtung deren elektrischer Dipole die Verbiegungen des EAPs 25 in der Regel ohne Volumenänderung bewirken.

Es sei angemerkt, dass hinsichtlich der in den Figuren gezeigten Ausführungsbeispiele vielfältige Kombinationsmöglichkeiten der Einzelmerkmale untereinander möglich sind. So kann beispielsweise die konkrete Formgebung und Anordnung des EAP-Antriebsmittel 24 entsprechend der zu verstellenden Teile 11, 40 und der entsprechenden Halteteile 13 ausgebildet sein. Ebenso kann die entsprechende Mechanik 35 oder das Verriegelungselement 30 beliebig variiert werden. Die EAP-Antriebe 24 können auch dreidimensional beispielsweise mit einer Art Stereolithographie-Verfahren hergestellt werden, und damit in ihrer Form beliebig den entsprechenden Verstellvorrichtungen 10 angepasst werden.

Prinzipiell lassen sich derartige elektroaktive Polymere 25 als Antriebsmittel 24 auch für andere Verstelleinrichtungen 10 im Kraftfahrzeug verwenden, die einen Antrieb 24 benötigen. Beispielhaft sind hier insbesondere die Verstellung der Innen- und Außenspiegel, die Zeigerführung bei Anzeigeinstrumenten, die Zentralverriegelung, sowie die Verstellung von Sitzen, genannt. Weiter ist es auch möglich, weitere Verriegelungen durch elektroaktive Polymere 25 vorzunehmen, wie beispielsweise die Verriegelung der Tank klappe 42 des Kraftfahrzeugs. Dabei werden die verstellbaren Elemente 11, 40 mittels der elektroaktiven Polymere 25 als Linear-Aktuatoren 24 oder als elektrisch aktive Biegeelemente 24 angetrieben.

## Patentansprüche

1. Verstellvorrichtung (10) in einem Kraftfahrzeug, mit mindestens einem beweglichen Teil (11, 40), das relativ zu einem Halteteil (13, 27) mittels eines Antriebsmittels (24) verstellbar ist, wobei das bewegliche Teil (11) als Verriegelungselement (30) ausgebildet ist, das die Bewegung eines weiteren, mittels eines elastischen Elements (46) betätigbaren Verstellglieds (40) blockiert oder freigibt, **dadurch gekennzeichnet, dass** das Antriebsmittel (24) ein elektroaktives Polymer (EAP) (25) umfasst, und das Verriegelungselement (30) als Verriegelungsbolzen (30) ausgebildet ist, der in der Verriegelungsposition in eine Aussparung (32) zur Verrastung des Verstellglieds (40) eingeführt ist.

2. Verstellvorrichtung (10) nach Anspruch 1, **dadurch gekennzeichnet, dass** das Antriebsmittel (24) das bewegliche Teil (11, 40) in eine lineare Bewegung (59) oder eine Drehbewegung (58), beziehungsweise eine pendelnde Bewegung (58) zu versetzen vermag.

3. Verstellvorrichtung (10) nach einem der vorhergehenden Ansprüche, **dadurch gekennzeichnet, dass** das elektroaktive Polymer (25) beim Verstellen des beweglichen Teils (11, 40) eine longitudinale oder biegeförmige Formänderung erfährt.

4. Verstellvorrichtung (10) nach einem der vorhergehenden Ansprüche, **dadurch gekennzeichnet, dass** mehrere elektroaktive Polymere (25) - insbesondere in einer geschichteten Anordnung oder in verzwirnter Form - zusammenzuwirken vermögen.

5. Verstellvorrichtung (10) nach Anspruch 1, **dadurch gekennzeichnet, dass** das Verriegelungselement (30) in die Aussparung (32) eingeführt ist, wenn am elektroaktiven Polymer (25) keine elektrische Spannung anliegt.

6. Verstellvorrichtung (10) nach einem der vorhergehenden Ansprüche, **dadurch gekennzeichnet, dass** das elektroaktive Polymer (25) als drehbare Lagerung (45) für das bewegliche Teil (11) ausgebildet ist.

7. Verstellvorrichtung (10) nach einem der vorhergehenden Ansprüche, **dadurch gekennzeichnet, dass** das elektroaktive Polymer (25) mit Elektroden (36) verbunden ist, an die eine Spannung zur Steuerung des Verstellvorgangs des beweglichen Teils (11, 40) anlegbar ist

8. Verstellvorrichtung (10) nach einem der vorhergehenden Ansprüche, **dadurch gekennzeichnet, dass** das elektroaktive Polymer (25) elektrische Dipole aufweist, die sich in einem angelegten elektrischen Feld ausrichten und **dadurch** eine Längenänderung oder eine Verbiegung des elektroaktiven Polymers (25) bewirken.

9. Verstellvorrichtung (10) nach einem der vorhergehenden Ansprüche, **dadurch gekennzeichnet, dass** das elektroaktive Polymer (25) elektrische Ionen ausweist, die bei einem angelegten elektrischen Feld innerhalb des elektroaktiven Polymers (25) wandern und **dadurch** eine Formänderung und eine Volumenänderung des elektroaktiven Polymers (25) bewirken.

10. Verfahren zum Verstellen mindestens eines beweglichen Teils (11, 40) im Kraftfahrzeug, nach einem der vorhergehenden Ansprüche, wobei das bewegliche Teil (11, 40) mit einem elektroaktiven Polymer (25) verbunden ist und beim Anlegen einer Spannung an das elektroaktive Polymer (25) dieses eine longitudinale oder biegeförmige Formänderung erfährt, die eine Verstellung des beweglichen Teils (11, 40) bewirkt

## Claims

1. Adjusting device (10) in a motor vehicle, with at least one movable part (11, 40), which is adjustable in relation to a holding part (13, 27) by means of a drive means (24), the movable part (11) being formed as a locking element (30), which blocks or releases the movement of a further adjusting member (40), which can be actuated by means of an elastic element (46), **characterized in that** the drive means (24) comprises an electroactive polymer (EAP) (25), and the locking element (30) is formed as a locking bolt (30), which in the locking position is inserted in a recess (32) for locking the adjusting member (40).

2. Adjusting device (10) according to Claim 1, **characterized in that** the drive means (24) is able to set the movable part (11, 40) in a linear motion (59) or a pivoting motion (58), or a pendular motion (58).

3. Adjusting device (10) according to one of the preceding claims, **characterized in that** the electroactive polymer (25) undergoes a longitudinal or flexural change in shape when the movable part (11, 40) is adjusted.

4. Adjusting device (10) according to one of the preceding claims, **characterized in that** a number of electroactive polymers (25) - in particular in a layered arrangement or in a twisted form - are able to interact.

5. Adjusting device (10) according to Claim 1, **characterized in that** the locking element (30) is inserted in the recess (32) when there is no electrical voltage applied to the electroactive polymer (25).

6. Adjusting device (10) according to one of the preceding claims, **characterized in that** the electroactive polymer (25) is formed as a pivotable mounting (45) for the movable part (11).

7. Adjusting device (10) according to one of the preceding claims, **characterized in that** the electroactive polymer (25) is connected to electrodes (36), to which a voltage for controlling the operation of adjusting the movable part (11, 40) can be applied.

8. Adjusting device (10) according to one of the preceding claims, **characterized in that** the electroactive polymer (25) has electric dipoles, which align themselves in an applied electric field and thereby bring about a change in length or a bending of the electroactive polymer (25).

9. Adjusting device (10) according to one of the preceding claims, **characterized in that** the electroactive polymer (25) has electric ions, which migrate within the electroactive polymer (25) when an electric field is applied and thereby bring about a change in shape and a change in volume of the electroactive polymer (25).

10. Method for adjusting at least one movable part (11, 40) in the motor vehicle according to one of the preceding claims, the movable part (11, 40) being connected to an electroactive polymer (25) and the latter undergoing a longitudinal or flexural change in shape that brings about an adjustment of the movable part (11, 40) when a voltage is applied to the said electroactive polymer (25).

## Revendications

1. Dispositif d'actionnement (10) pour un véhicule automobile comprenant au moins une pièce mobile (11, 40) qui peut être déplacée à l'aide d'un moyen d'entraînement (24) par rapport à une pièce de fixation (13, 27),
la pièce mobile (11) étant réalisée sous la forme d'un élément de verrouillage (30) qui bloque ou libère le mouvement d'un autre organe d'actionnement (40) commandé par un élément élastique (46)
**caractérisé en ce que**
le moyen d'entraînement (24) est un polymère électro-actif (EAP) (25) et l'élément de verrouillage (30) est réalisé sous la forme d'un goujon de verrouillage (30) qui s'introduit dans une cavité (32) en position de verrouillage pour accrocher l'organe réglable (40).

2. Dispositif d'actionnement (10) selon la revendication 1,
**caractérisé en ce que**
le moyen d'entraînement (24) peut déplacer la pièce mobile (11, 40) suivant un mouvement linéaire (59) ou un mouvement de rotation (58) ou un mouvement pendulaire (58).

3. Dispositif d'actionnement (10) selon l'une des revendications précédentes,
**caractérisé en ce que**
le polymère électro-actif (25) subit une variation de forme longitudinale ou en flexion lors de l'actionnement de la pièce mobile (11, 40).

4. Dispositif d'actionnement (10) selon l'une des revendications précédentes,
**caractérisé par**
plusieurs polymères électro-actifs (25) qui coopèrent notamment sur une disposition stratifiée ou une disposition imbriquée.

5. Dispositif d'actionnement (10) selon la revendication 1,
**caractérisé en ce que**
l'élément de verrouillage (30) s'introduit dans une cavité (32) lorsqu'aucune tension électrique n'est appliquée au polymère électro-actif (25).

6. Dispositif d'actionnement (10) selon l'une des revendications précédentes,
**caractérisé en ce que**
le polymère électro-actif (25) est réalisé sous la forme d'un appui extensible (45) pour la pièce mobile (11).

7. Dispositif d'actionnement (10) selon l'une des revendications précédentes,
**caractérisé en ce que**
le polymère électro-actif (25) est relié à des électrodes (36) auxquelles on applique une tension pour commander l'organe d'actionnement de la pièce mobile (11, 40).

8. Dispositif d'actionnement (10) selon l'une des revendications précédentes,
**caractérisé en ce que**
le polymère électro-actif (25) comporte des dipôles électriques qui s'alignent dans le champ électrique appliqué et produisent ainsi une variation de longueur ou une flexion du polymère électro-actif (25).

9. Dispositif d'actionnement (10) selon l'une des revendications précédentes,
**caractérisé en ce que**
le polymère électro-actif (25) contient des ions électriques qui migrent à l'intérieur du polymère électro-actif (25) lorsqu'on applique un champ électrique et produisent ainsi une variation de forme et une variation de volume du polymère électro-actif (25).

10. Procédé d'actionnement d'au moins une pièce mobile (11, 40) dans un véhicule automobile selon l'une des revendications précédentes,
selon lequel
la pièce mobile (11, 40) est reliée à un polymère électro-actif (25) et lorsqu'on applique une tension au polymère électro-actif (25), ce dernier subit une variation de forme longitudinale ou en flexion produisant un déplacement de la pièce mobile (11, 40).
